# EUROPEAN PATENT SPECIFICATION

(11) **EP 4 217 993 B1**
(45) Date of publication and mention of the grant of the patent: **19.11.2025**
(21) Application number: 21786139.2
(22) Date of filing: 28.09.2021
(51) Int. Cl.: G09B 23/28

(54) **DEVICE FOR SIMULATING THE MOVEMENT OF AN ENDOSCOPE IN AN ENVIRONMENT**
VORRICHTUNG ZUR SIMULATION DER BEWEGUNG EINES ENDOSKOPS IN EINER UMGEBUNG
DISPOSITIF PERMETTANT DE SIMULER LE MOUVEMENT D'UN ENDOSCOPE DANS UN ENVIRONNEMENT

(30) Priority: 28.09.2020 FR 2009834
(43) Date of publication of application: 02.08.2023
(73) Proprietor: Institut Hospitalo-Universitaire De Strasbourg, 67000 Strasbourg (FR); UNIVERSITEIT TWENTE, 7522 NB Enschede (NL); INRIA - Institut National de Recherche en Informatique et en Automatique, 78150 Le Chesnay (FR); Université de Strasbourg, 67000 Strasbourg (FR)
(72) Inventor: STRAMIGIOLI, Stefano, 7621 AE Borne (NL); COTIN, Stéphane, 67000 Strasbourg (FR); VAN AS, David, 7523VC Enschede (NL); BESSARD DUPARC, Rémi, 67100 Strasbourg (FR); PERRETTA, Silvana, 67000 Strasbourg (FR)
(74) Representative: Lavoix
(86) International application number: PCT/EP2021/076651
(87) International publication number: WO 2022/064059

(56) References cited:
- WO-A1-2015/095715
- WO-A1-2019/092382
- US-A- 5 800 178

## Description

The present invention relates to a device for simulating the movement of an endoscope in an environment.

Endoscopy is a method of medical or industrial visual exploration of the interior of a cavity not visible to the eye. The instrument used, called an endoscope, consists of an optical tube with a lighting system. When coupled with a video camera, the acquired image can be displayed on a monitor (see WO 2015095715).

Endoscopy is used in the medical field, either for diagnosis or for surgery.

In order to train surgeons to use an endoscope, simulators have been developed.

However, current simulators are expensive and only available in hospitals, simulation centres, or colleges. In addition, they are bulky and require sophisticated equipment such as electromagnetic sensors in the tube to operate.

There is therefore a need for an endoscope simulator that is easier to handle, more affordable and can be used at home to facilitate the training of medical staff in endoscopy remotely or in reception centres.

To that end, the present description relates to a device for simulating the movement of an endoscope in an environment, the simulation device comprising:
- a tube modelling an endoscope tube,
- a tracking module comprising a housing into which the tube is insertable and translatable and/or rotatable, the tracking module comprising means for detecting movements of the tube in the housing and means for communicating the detected movements to a controller, the controller being configured to generate, at each instant, an image of a portion of an environment as a function of the movements of the tube detected by the detecting means so as to simulate the movement of an endoscope in the environment,
wherein the tracking module comprises fastening means adapted to fasten the tracking module in a releasable manner onto a support, such as a table.

According to particular embodiments, the compensation device has one or more of the following features taken in isolation or in any combination that is technically possible:
- the fastening means comprise at least one compression member capable of compressing the support;
- the or at least one compression member comprises at least one element made of a material suitable for fastening to the support by pressure, suction or suction cup;
- the fastening means comprise two opposing compression members adapted to compress opposing surfaces of the support;
- the compression members are two clamping jaws connected to each other by at least one holding element or are two magnetic elements;
- the holding element comprises a spring;
- the tracking module comprises a channel upstream of the housing, the channel being adapted to support the tube as it is inserted into and moved within the housing of the tracking module;
- the tracking module weighs 500 grams or less;
- the detecting means comprise a single optical sensor;
- the device comprises a controller adapted to communicate with the communication means, the controller being configured to generate, at each instant, an image of a portion of an environment based on movements of the tube, detected by the detecting means, so as to simulate the movement of an endoscope in the environment.

Other characteristics and advantages of the invention will become apparent upon reading the following description of embodiments of the invention, given only as an example and referencing the drawings, in which:
[Fig 1], Figure 1, a schematic view of an example device for simulating the movement of an endoscope in an environment, the simulation device comprising an endoscope model, a tracking module and a controller,
[Fig 2], Figure 2, is a schematic representation of an example of the endoscope model of Figure 1,
[Fig 3], Figure 3, is a schematic representation of an example of the tracking module of Figure 1, into which a tube of the endoscope model has been inserted, the tracking module comprising means for fastening the tracking module to a support in a first embodiment,
[Fig 4], Figure 4, is a schematic representation of an example of the tracking module of Figure 1, into which a tube of the endoscope model has been inserted, the tracking module comprising means for fastening the tracking module to a support in a second embodiment,
[Fig 5], Figure 5, is a schematic representation of an example of the tracking module of Figure 1, into which a tube of the endoscope model has been inserted, the tracking module comprising means for fastening the tracking module to a support in a third embodiment,
[Fig 6], Figure 6, is a schematic representation of an example of the tracking module of Figure 1, into which a tube of the endoscope model has been inserted, the tracking module comprising means for fastening the tracking module to a support in a fourth embodiment, and
[Fig 7], Figure 7, is a schematic representation of an example of the controller of Figure 1,

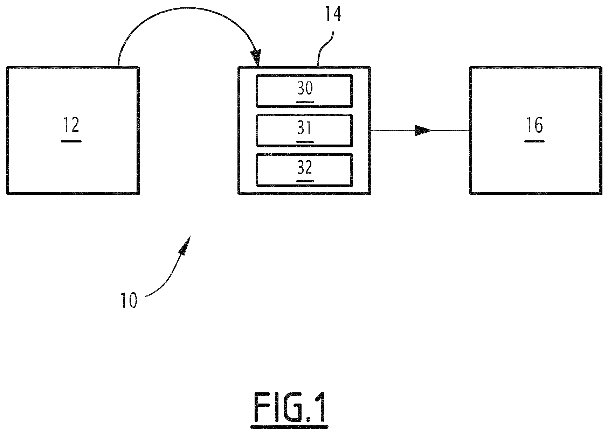

A device 10 for simulating the movement of an endoscope in an environment is shown in Figure 1. The device 10 is intended to be used by a user, such as a doctor (surgeon), to train the user to handle an endoscope, in the absence of an actual endoscope and without invasion into a living body, whether human or animal.

The environment is a predetermined environment. Such an environment is either a real environment (reconstructed from images or videos) or a fully modelled environment. The environment is, for example, an inner portion of the body of a living being, such as a human or animal, or any other type of environment unrelated to the body of a living being, such as an urban or forest environment.

In the example shown in Figure 1, the simulation device 10 comprises an endoscope model 12, a tracking module 14 and a controller 16.

The endoscope model 12 is an instrument intended to be handled by a user and reproducing the main characteristics of an endoscope. Preferably, the endoscope model 12 is capable of operating in a similar manner to a real endoscope and is visually similar to a real endoscope.

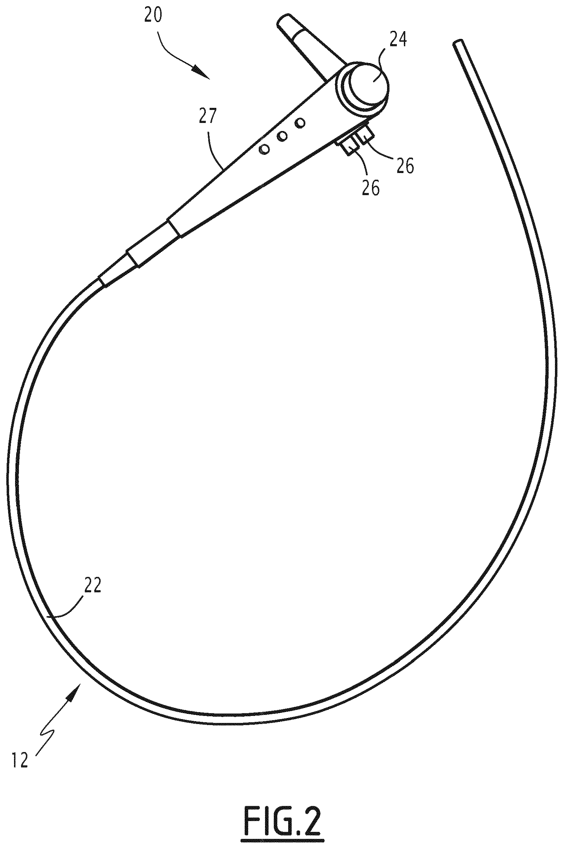

In the example shown in Figure 2, the endoscope model 12 comprises a body 20 and a tube 22 extending from the body 20. In this example, the body 20 also includes a first actuator 24 (knob) and second actuators 26 (buttons).

The body 20 comprises, for example, at least one grip portion 27 suitable for being held by the user's hand. The body 20 is, for example, made of plastic.

The tube 22 models the tube of an endoscope. The dimensions (length, thickness), rigidity and material of the tube 22 are, for example, the same as those of a real endoscope.

The tube 22 is, for example, flexible. The tube 22 comprises, for example, a metal core covered by plastic. The tube 22 has, for example, a diameter between 2 and 15 millimetres (mm) and a length between 15 and 150 centimetres (cm).

The first actuator 24 is adapted to move an end of the tube 22 opposite the body 20, in particular to rotate it.

The second actuators 26 are actuators that are not necessarily functional and are representative of buttons for sending air or water into the tube of an actual endoscope.

The tracking module 14 is a physical assembly modelling a cavity into which the tube of an endoscope would be inserted. The tracking module 14 is adapted to receive the tube 22 of the endoscope model 12 and to detect, track and communicate the movements of the tube 22.

The monitoring module 14 is portable. This makes it easy for a user to move and handle.

Preferably, the tracking module 14 weighs 500 grams (g) or less.

Preferably, the dimensions of the tracking module 14 are such that the tracking module 14 is suitable for insertion into a housing with a width of less than 8 cm, a length of less than 18 cm and a depth of less than 17 cm. The tracking module 14 is therefore small, making it easy to transport and use.

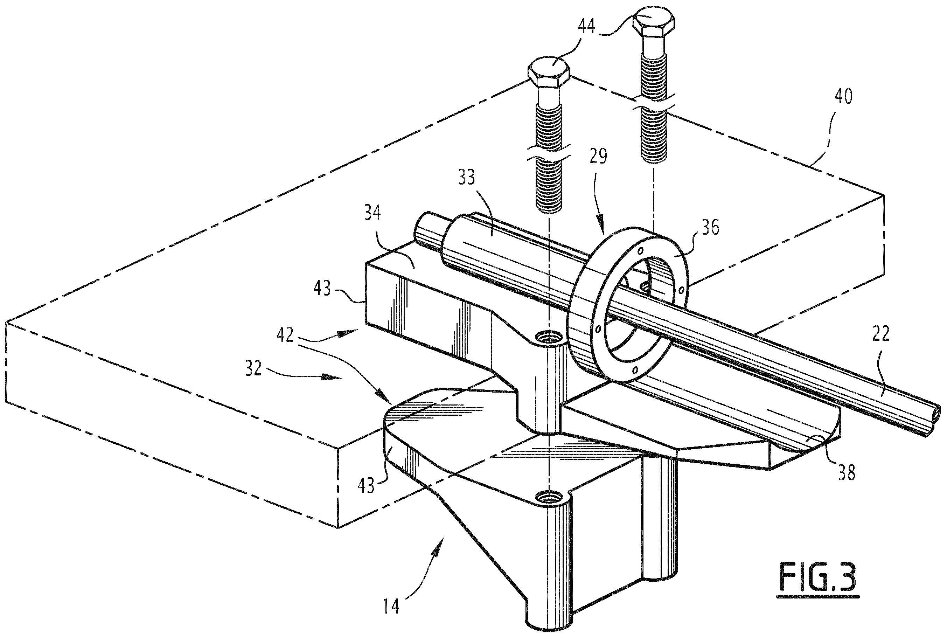

The tracking module 14 comprises a housing 29 into which the tube 22 is insertable (as in Figure 3) and translatable and/or rotatable, means 30 for detecting the movements of the tube 22 in the housing 29, communication means 31 and means 32 for fastening the tracking module 14. The detecting means 30, communication means 31 and fastening means 32 are illustrated in Figure 1.

In a first embodiment illustrated in Figure 3, the housing 29 comprises a sleeve 33 attached to a base 34 on which the sleeve 33 rests.

Both ends of the sleeve 33 are hollow to allow the passage of the tube 22 of the endoscope model 14. The diameter of the sleeve 33 is adapted to the dimensions of the tube 22 of the endoscope model 14 so as to allow insertion and translational and/or rotational movement of the tube 22 within the sleeve 33 while ensuring that the tube 22 is held in the sleeve 33.

In the example shown in Figure 3, a ring 36 with a diameter greater than the diameter of the sleeve 33 is positioned upstream of the end of the sleeve 33 through which the tube 22 is to be inserted. In one example, the ring 36 is covered by a flexible membrane having a hole in its centre opposite the hole in the sleeve 33 and of similar diameter to the hole in the sleeve 33. Such a membrane allows for a more realistic rendering of the movement of the tube 22 when handled by the user.

In the example shown in Figure 3, the tracking module 14 further comprises a channel 38 upstream of the housing 29. The channel 38 is suitable for supporting the tube 22 as it is inserted and moved in the housing 29 of the tracking module 14.

In this example, the channel 38 is attached to the base 34 on which the sleeve 33 rests. The channel 38 also has a curved shape.

Such a channel 38 prevents the tube 22 from falling out under the effect of gravity, which could damage the tube 22 or disturb the user when handling the endoscope model 12.

The detecting means 30 is, for example, located in a recess in the base of the tracking module 14 so that it is below the tube 22 when the tube 22 is inserted into the housing 29. Alternatively, the detecting means 30 are positioned at any suitable location on the sleeve 33 to detect and measure movements of the tube 22.

The detecting means 30 comprise, for example, at least one sensor suitable for detecting and measuring the movements of the tube 22 in the housing 29. In one example, at least one sensor is adapted to detect the presence or absence of the tube 22 in the housing 29 and at least one other sensor is adapted to measure the movements of the tube 22 in the housing 29.

Preferably, the detecting means 30 comprise at most one sensor for detecting the tube 22 and an optical sensor for measuring the movements of the tube 22, or to further limit costs, only the optical sensor. This simplifies the manufacture of the tracking module 14, and therefore reduces its cost. In addition, this also reduces the weight of the tracking module 14.

The optical sensor is, for example, a laser sensor.

The communication means 31 are adapted to communicate data representative of the movements detected by the detecting means 30 to the controller 16. The communication means 31 communicate, for example, via a wireless link of the Wifi type with the controller 16. Alternatively, communication is achieved by a wired connection.

In one example, the communication means 31 comprise a transmitter belonging to the tracking module 14 and a receiver belonging to the controller 16 for transmitting data from the detecting means 30 to the controller 16.

The fastening means 32 are adapted to fasten the tracking module 14 in a releasable manner onto a support 40, external to the tracking module 14, so as to allow the safe handling of the tracking module 14, in particular when inserting and moving the tube 22 in the housing 29. The term "releasable" is understood to mean that the fastening is not permanent.

The support 40 is typically a flat surface, such as a table, or other suitable surface.

Advantageously, the fastening means 32 comprise at least one compression member 42 capable of compressing the support 40.

In the embodiment illustrated in Figure 3, the fastening means 32 comprise two opposing compression members 42 adapted to compress opposing surfaces of the support 40. In particular, the base 34 forms one of the compression members 42. In this embodiment, the compression members 42 are two clamping jaws 43 connected to each other by at least one holding element 44 (in this case two holding elements 44 in Figure 3). The term "clamping jaw" refers to two parts that can be moved apart or together to firmly clamp the support 40. The holding element 44 comprises two screws in Figure 3. Alternatively, the holding element 44 is a rod or any other mechanical element allowing the two clamping jaws 43 to be held together.

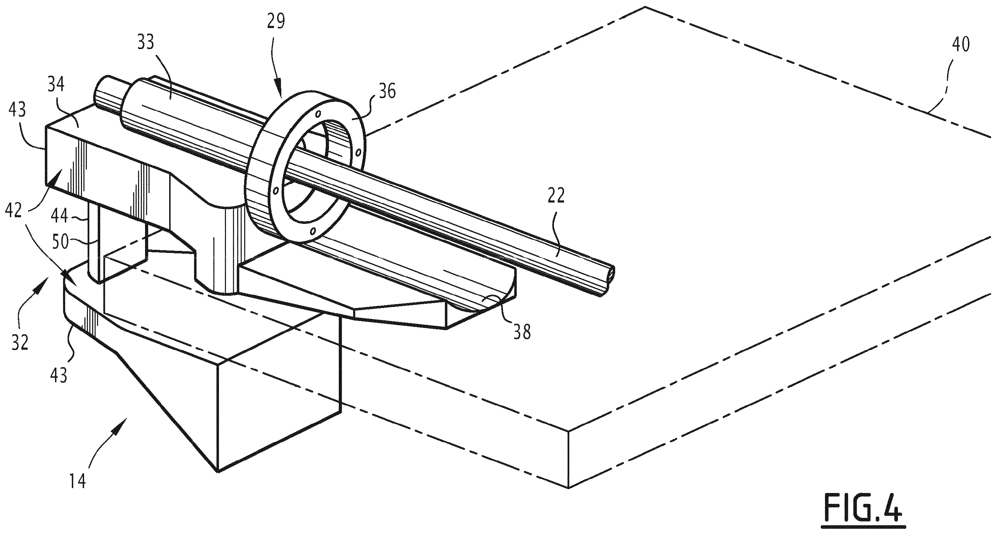

A second embodiment of the tracking module 14 is illustrated in Figure 4. The tracking module 14 of Figure 4 comprises the same elements as the tracking module 14 of the first embodiment shown in Figure 3 except for the holding element 44 of the fastening means 32. Indeed, in the second embodiment, the holding element 44 comprises a spring member 50 connecting the two clamping jaws 43. The length of the spring is chosen to be less than the thickness of the support 40 to which the tracking module 14 is intended to be attached. Thus, the spring is stretched to insert the support 40 between the clamping jaws 43, which allows, when it is released, once the support 40 is inserted, the compression of the clamping jaws 43 against the surfaces of the support 40.

Such a spring member 50 facilitates attachment to the support 40. In particular, fastening is simplified compared to the first embodiment since it is no longer necessary to manipulate the holding member 44 to adjust the compression, as is the case with screws or the like.

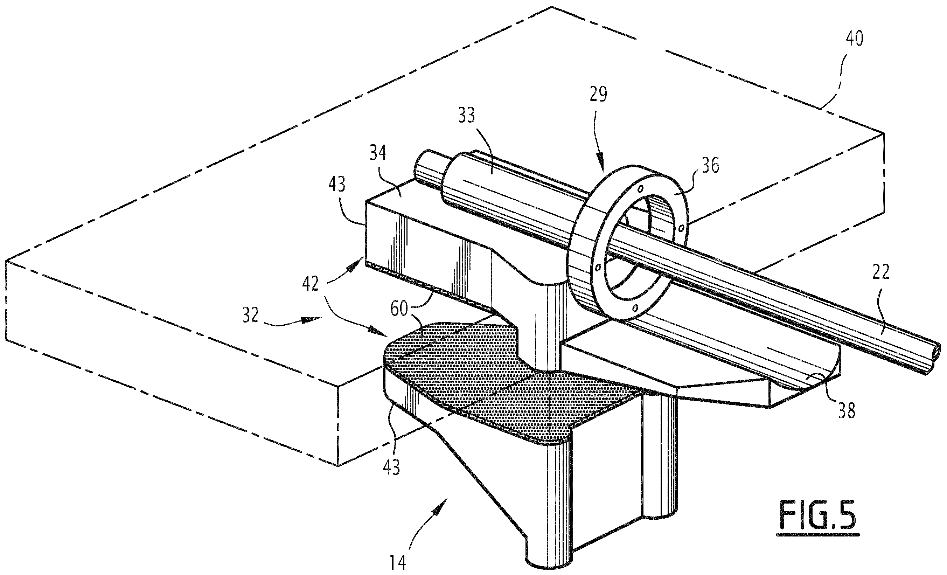

A third embodiment of the tracking module 14 is illustrated in Figure 5. The tracking module 14 of Figure 5 comprises the same elements as the tracking module 14 of the first embodiment shown in Figure 3 except for the fastening means 32. Indeed, in the third embodiment, the fastening means 32 comprise two opposing compression members 42 suitable for compressing opposite surfaces of the support 40. In this embodiment, the compression members 42 are two magnetised elements (magnetised plates) or comprise at least one magnetised portion 60 so as to compress the support 40 between the two compression members 42 due to the attraction of the magnets. Such a fastening means 32 facilitates the attachment to the support 40. In particular, the attachment is simplified compared to the first embodiment since a holding element 44 is no longer required to connect the two compression members 42.

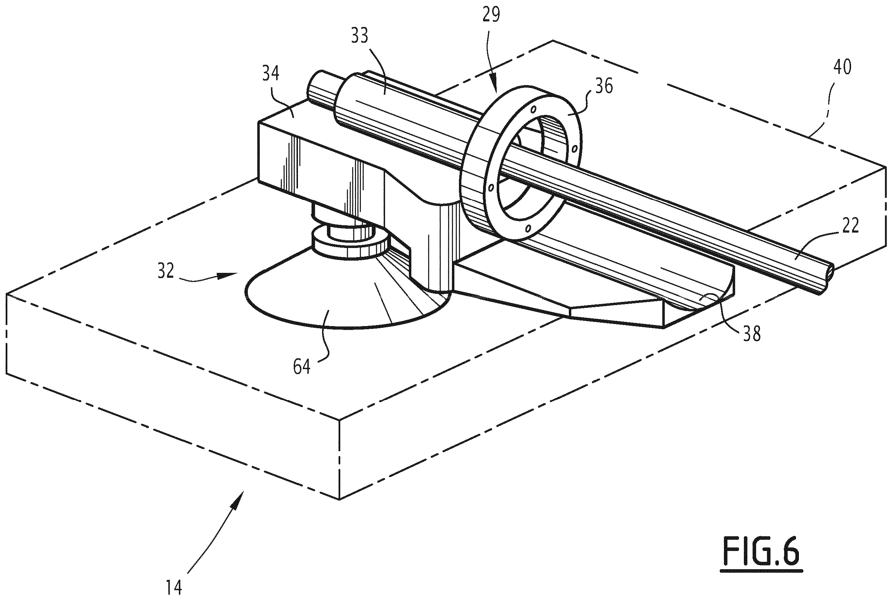

A fourth embodiment of the tracking module 14 is illustrated in Figure 6. The tracking module 14 of Figure 6 comprises the same elements as the tracking module 14 of the first embodiment shown in Figure 3 except for the fastening means 32. In fact, in the fourth embodiment, the fastening means 32 comprise at least one compression member 42 suitable for compressing the support 40. The or at least one compression member 42 comprises at least one element made of a material suitable for fastening to the support 40 by pressure, suction or suction cup. The material is, for example, selected from: rubber, silicone and polyurethane. Thus, in Figure 6, the compression member 42 is a suction cup 64.

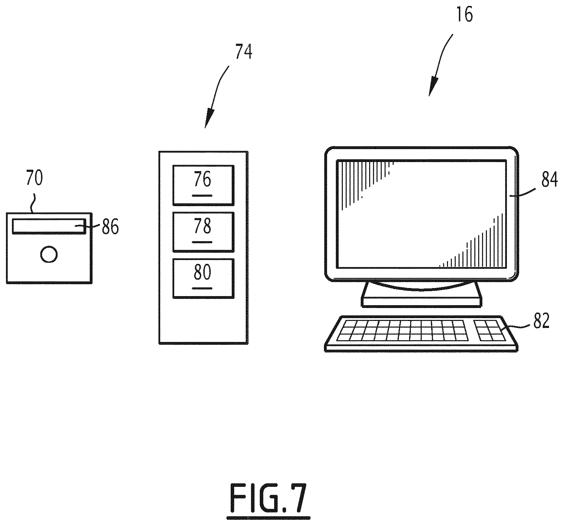

An example controller 16 is illustrated in Figure 7. In this example, the controller 16 interacts with a computer program product 70.

The controller 16 is preferably a computer. In one specific example, the controller 16 is a laptop computer.

More generally, the controller 16 is an electronic computer capable of manipulating and/or transforming data represented as electronic or physical quantities in controller 16 registers and/or memories into other similar data corresponding to physical data in memories, registers or other types of display, transmission or storage devices.

The controller 16 interacts with the computer program product 70.

As illustrated in Figure 7, the controller 16 comprises a processor 74 with a data processing unit 76, memories 78 and an information media reader 80. In the example shown in Figure 7, the controller 16 comprises a human-machine interface 82 and a display 84.

Data relating to the predetermined environment of the simulation implemented by the controller 16 is advantageously stored in a memory 78.

The computer program product 70 comprises an information medium 86.

The information medium 86 is a medium readable by the controller 16, usually by the data processing unit 76. The readable information medium 86 is a medium adapted to store electronic instructions and capable of being coupled to a bus of a computer system.

For example, the information medium 86 is a USB drive, floppy disk, optical disk, CD-ROM, magneto-optical disk, ROM, RAM, EPROM, EEPROM, magnetic card or optical card.

A computer program 70 containing program instructions is stored on the information medium 86.

The computer program 70 is loadable onto the data processing unit 16 and causes a method for simulating the movement of an endoscope to be implemented when the computer program 70 is implemented on the processing unit 76 of the controller 16. The simulation method will be described in more detail below.

The operation of the simulation device 10 will now be described.

Initially, a user inserts the tube 22 of the endoscope model 12 into the housing 29 of the tracking module 14.

The presence of the tube 22 in the housing 29 is detected by the detecting means 30. The communication means 31 relay data representative of the detection to the controller 16.

The controller 16, interacting with the computer program product 70, then generates an image of a portion of the environment as a starting point for the simulation. The generated image is typically a three-dimensional image.

The user then moves the tube 22 into the housing 29. The movements are translations and/or rotations of the tube 22. Optionally, the user uses the first actuator 24 to rotate the end of the tube 22.

The presence of the tube 22 in the housing 29 is detected by the detecting means 30. The data obtained by the detecting means 30 is sent, at any time (preferably in real time) by the communication means 31 to the controller 16 for processing.

The controller 16, interacting with the computer program product 70, then processes the received data according to the following simulation process so as to simulate the movements of the tube 22 in the predetermined environment.

The simulation method comprises generating a new image of the portion of the environment at each instant based on the movements of the tube 22 detected by the detecting means 30. The portion of the environment imaged is the portion of the environment that would have been observed through an endoscope moving in said environment.

For this purpose, the movements of the tube 22 detected by the detecting means 30 are transposed (translated) into corresponding movements in the predetermined environment. Based on the detected movements, a specific view of the environment is imaged that corresponds to the field of view of the simulated endoscope. For example, a pathfinding algorithm is used to link the detected movements to the portion of the environment corresponding to the field of view of a simulated endoscope.

Optionally, where the borescope model 12 comprises a first actuator 24 and/or second actuators 26, any actuations of the actuators 24, 26 are communicated to the controller 16 by communication means of the borescope model 12 so as to be taken into account in generating the image.

Advantageously, the simulation method comprises displaying the generated image on the display 84.

When the user wishes to stop the simulation, they remove the tube 22 from the housing 29, which is detected by the detecting means 30 and transmitted by the communication means 31 to the controller 16.

Thus, the present simulation device 10 can be used to train users, such as surgeons, to handle an endoscope.

The simulation device 10 consists of a few components: an endoscope model 12, a tracking module 14 and a controller 16. These elements, including the tracking module 14, allow simple simulation of the movements of an endoscope in a virtual environment. This reduces the cost of the simulation device 10 compared to current simulators.

The releasable fastening means 32 of the tracking module 14 allow the tracking module 14 to be held in position during handling of the endoscope so that the simulation is not distorted and is carried out without the risk of damaging the tube 22 or the tracking module 14. In particular, such fastening means 32 allow for a lightweight and space-saving tracking module 14, in contrast to the corresponding modules of the state of the art.

Thus, the described endoscope simulator is easier to handle, less bulky, less heavy and can therefore be used in all kinds of places, which facilitates the training of medical staff in handling an endoscope.

The skilled person will appreciate that the above-described embodiments and variants can be combined to form new embodiments, provided that they are technically compatible.

## Claims

1. A device (10) for simulating the movement of an endoscope in an environment, the simulation device (10) comprising:
a. a tube (22) modelling an endoscope tube,
b. a tracking module (14) comprising a housing (29) into which the tube (22) is insertable and translatable and/or rotatable, the tracking module (14) comprising means (30) for detecting movements of the tube (22) in the housing (29) and means (31) for communicating the detected movements to a controller (16), the controller (16) being configured to generate, at each instant, an image of a portion of an environment based on the movements of the tube (22) detected by the detecting means (30) so as to simulate the movement of an endoscope in the environment,
**characterized in that** the tracking module (14) comprises fastening means (32) adapted to fasten the tracking module (14) in a releasable manner onto a support (40), such as a table.

2. A device (10) according to claim 1, wherein the fastening means (32) comprise at least one compression member (42) adapted to compress the support (40).

3. A device (10) according to claim 2, wherein the or at least one compression member (42) comprises at least one element made of a material suitable for fastening to the support (40) by pressure, suction or suction cup.

4. A device (10) according to claim 2 or 3, wherein the fastening means (32) comprise two opposing compression members (42) adapted to compress opposing surfaces of the support (40).

5. A device (10) according to claim 3, wherein the compression members (42) are two clamping jaws (43) connected to each other by at least one holding element (44) or are two magnetic elements.

6. A device (10) according to claim 5, wherein the holding element (44) comprises a spring.

7. A device (10) according to any one of claims 1 to 6, wherein the tracking module (14) comprises a channel (38) upstream of the housing (29), the channel (38) being adapted to support the tube (22) as it is inserted into and moved within the housing (29) of the tracking module (14).

8. A device (10) according to any one of claims 1 to 7, wherein the tracking module (14) weighs 500 grams or less.

9. A device (10) according to any one of claims 1 to 8, wherein the detecting means (30) comprise a single optical sensor.

10. A device (10) according to any one of claims 1 to 9, wherein the device (10) comprises a controller (16) adapted to communicate with the communication means (31), the controller (16) being configured to generate, at each instant, an image of a portion of an environment based on movements of the tube (22) detected by the detecting means (30) so as to simulate movement of an endoscope in the environment.

## Patentansprüche

1. Vorrichtung (10) zum Simulieren der Bewegung eines Endoskops in einer Umgebung, die Simulationsvorrichtung (10) umfassend:
a. ein Rohr (22), das ein Endoskoprohr modelliert,
b. ein Verfolgungsmodul (14), umfassend ein Gehäuse (29), in das das Rohr (22) einführbar und verschiebbar und/oder drehbar ist, das Verfolgungsmodul (14) umfassend Einrichtungen (30) zum Erfassen von Bewegungen des Rohrs (22) in dem Gehäuse (29) und Einrichtungen (31) zum Übermitteln der erfassten Bewegungen an eine Steuereinheit (16), wobei die Steuereinheit (16) konfiguriert ist, um zu jedem Zeitpunkt ein Bild eines Teils einer Umgebung basierend auf den von den Erfassungseinrichtungen (30) erfassten Bewegungen des Rohrs (22) zu erzeugen, um die Bewegung eines Endoskops in der Umgebung zu simulieren,
**dadurch gekennzeichnet, dass** das Verfolgungsmodul (14) Befestigungseinrichtungen (32) umfasst, die angepasst sind, um das Verfolgungsmodul (14) auf lösbare Weise an einem Träger (40), wie beispielsweise einem Tisch, zu befestigen.

2. Vorrichtung (10) nach Anspruch 1, wobei die Befestigungseinrichtungen (32) mindestens ein Kompressionselement (42) umfassen, das angepasst ist, um den Träger (40) zusammenzudrücken.

3. Vorrichtung (10) nach Anspruch 2, wobei das oder mindestens ein Druckelement (42) mindestens ein Element aus einem Material umfasst, das zum Befestigen an dem Träger (40) durch Druck, Saugen oder Saugnapf geeignet ist.

4. Vorrichtung (10) nach Anspruch 2 oder 3, wobei die Befestigungseinrichtungen (32) zwei gegenüberliegende Kompressionselemente (42) umfassen, die angepasst sind, um gegenüberliegende Oberflächen des Trägers (40) zusammenzudrücken.

5. Vorrichtung (10) nach Anspruch 3, wobei die Druckelemente (42) zwei durch mindestens ein Halteelement (44) miteinander verbundene Klemmbacken (43) oder zwei Magnetelemente sind.

6. Vorrichtung (10) nach Anspruch 5, wobei das Halteelement (44) eine Feder umfasst.

7. Vorrichtung (10) nach einem der Ansprüche 1 bis 6, wobei das Verfolgungsmodul (14) einen Kanal (38) stromaufwärts von dem Gehäuse (29) umfasst, wobei der Kanal (38) dazu angepasst ist, um das Rohr (22) zu stützen, wenn es in das Gehäuse (29) des Verfolgungsmoduls (14) eingeführt und darin bewegt wird.

8. Vorrichtung (10) nach einem der Ansprüche 1 bis 7, wobei das Verfolgungsmodul (14) 500 Gramm oder weniger wiegt.

9. Vorrichtung (10) nach einem der Ansprüche 1 bis 8, wobei die Erfassungseinrichtungen (30) einen einzigen optischen Sensor umfassen.

10. Vorrichtung (10) nach einem der Ansprüche 1 bis 9, wobei die Vorrichtung (10) eine Steuerung (16) umfasst, die angepasst ist, um mit den Kommunikationseinrichtungen (31) zu kommunizieren, wobei die Steuereinheit (16) konfiguriert ist, um zu jedem Zeitpunkt ein Bild eines Teils einer Umgebung basierend auf Bewegungen des Rohrs (22) zu erzeugen, die von dem Erfassungseinrichtungen (30) erfasst werden, um die Bewegung eines Endoskops in der Umgebung zu simulieren.

## Revendications

1. Dispositif (10) de simulation du déplacement d'un endoscope dans un environnement, le dispositif de simulation (10) comprenant :
a. un tube (22) modélisant un tube d'endoscope,
b. un module de suivi (14) comprenant un logement (29) dans lequel le tube (22) est propre à être inséré et déplacé en translation et/ou en rotation, le module de suivi (14) comprenant des moyens (30) de détection des mouvements du tube (22) dans le logement (29) et des moyens (31) de communication des mouvements détectés à un contrôleur (16), le contrôleur (16) étant configuré pour générer, à chaque instant, une image d'une portion d'un environnement en fonction des mouvements du tube (22) détectés par les moyens de détection (30) de sorte à simuler le déplacement d'un endoscope dans l'environnement,
**caractérisé en ce que** le module de suivi (14) comprend des moyens de fixation (32) propres à fixer de manière amovible le module de suivi (14) à un support (40), tel qu'une table.

2. Dispositif (10) selon la revendication 1, dans lequel les moyens de fixation (32) comprennent au moins un organe de compression (42) propre à comprimer le support (40).

3. Dispositif (10) selon la revendication 2, dans lequel le ou au moins un organe de compression (42) comprend au moins un élément réalisé dans un matériau propre à assurer la fixation au support (40) par pression, succion, ou ventouse.

4. Dispositif (10) selon la revendication 2 ou 3, dans lequel les moyens de fixation (32) comprennent deux organes de compression (42) opposés propres à comprimer des surfaces opposées du support (40).

5. Dispositif (10) selon la revendication 3, dans lequel les organes de compression (42) sont deux mâchoires (43) reliées l'une à l'autre par au moins un élément de maintien (44) ou sont deux éléments aimantés.

6. Dispositif (10) selon la revendication 5, dans lequel l'élément de maintien (44) comprend un ressort.

7. Dispositif (10) selon l'une quelconque des revendications 1 à 6, dans lequel le module de suivi (14) comprend une gouttière (38) en amont du logement (29), la gouttière (38) étant propre à supporter le tube (22) lors de son insertion et de son déplacement dans le logement (29) du module de suivi (14).

8. Dispositif (10) selon l'une quelconque des revendications 1 à 7, dans lequel le module de suivi (14) a un poids inférieur ou égal à 500 grammes.

9. Dispositif (10) selon l'une quelconque des revendications 1 à 8, dans lequel les moyens de détection (30) comprennent un seul capteur optique.

10. Dispositif (10) selon l'une quelconque des revendications 1 à 9, dans lequel le dispositif (10) comprend un contrôleur (16) propre à communiquer avec les moyens de communication (31), le contrôleur (16) étant configuré pour générer, à chaque instant, une image d'une portion d'un environnement en fonction des mouvements du tube (22) détectés par les moyens de détection (30) de sorte à simuler le déplacement d'un endoscope dans l'environnement.
